# EUROPÄISCHE PATENTSCHRIFT

(11) **EP 0 591 474 B1**
(45) Veröffentlichungstag und Bekanntmachung des Hinweises auf die Patenterteilung: **11.01.1995**
(21) Anmeldenummer: 92923289.0
(22) Anmeldetag: 04.11.1992
(51) Int. Cl.: A01G 9/10

(54) **PFLANZTOPF**
PLANTING-OUT POT
POT POUR LA CULTURE DE PLANTES

(30) Priorität: 07.11.1991 DE 9113876 U; 15.10.1992 DE 4234737
(43) Veröffentlichungstag der Anmeldung: 13.04.1994
(73) Patentinhaber: Wibmer GmbH u. Co. Kommanditgesellschaft Papier - Formtechnik, D-72124 Pliezhausen (DE)
(72) Erfinder: WIBMER, Albert, D-7410 Reutlingen (DE); WALZ, Reinhold, D-7410 Reutlingen (DE)
(74) Vertreter: Wolff, Michael, Dipl.-Phys.
(86) Internationale Anmeldenummer: EP9202523
(87) Internationale Veröffentlichungsnummer: WO9308678

(56) Entgegenhaltungen:
- EP-A- 0 332 733
- DE-A- 2 655 287
- DE-U- 8 711 055
- US-A- 2 079 177
- US-A- 2 656 969
- US-A- 2 722 311

## Beschreibung

Die Erfindung betrifft einen Pflanztopf, hauptsächlich aus in Erde verrottenden und im übrigen aus ökologisch unbedenklichen Materialien. Solche Behälter zur Jungpflanzenaufzucht sollen eine gewisse Standzeit lang formbeständig sein, aber dennoch den Austritt von Wurzeln ermöglichen, solange sie in Gärtnereien oder anderen Aufzuchtanstalten während der Kulturzeit bis zu zwei Jahren stehen.
Ein aus der DE 82 12 729 U1 (oder AT 390 165) bekannter Pflanzenbehälter für baumartige Pflanzen besteht aus getränkter Bitumenpappe und ist durch Zusammenfalten "und/oder" Zusammenfügen einer Abwicklung des Behälters herstellbar, welche aus einem Bandmaterial heraustrennbar ist. Im Ausführungsbeispiel besteht die einstückige Abwicklung aus einem Kreisringsektor als Behältermantel, aus einer angeformten Kreisscheibe als Behälterboden und aus zwei an die Kreisscheibe angeformten halbovalen Lappen, die nach dem Hochbiegen an dem ringförmigen Mantel mittels Heftklammern befestigt werden, wobei eine Klammer die Enden der Mantelabwicklung miteinander verbindet. - Abgesehen von dem mit dem Pflanzenbehälter in die Erde gelangenden Bitumen ist an diesem nachteilig, daß infolge der komplizierten Gesamtabwicklung der zusammenhängenden Behälterteile verhältnismäßig viel Bandmaterial abfällt, daß die Handhabung dieses Pflanzenbehälters infolge seiner labilen Form kaum möglich ist und daß die Bitumenpappe eine Durchwurzelung des Mantels und des Bodens merklich erschwert.
Letzteres gilt, sogar in höherem Ausmaß, für einen bekannten Pflanztopf aus dem für Eierbehälter verwendeten verdichteten Papierbrei (Pulp). Die Trockenmasse ist dabei so dicht, daß aus Bodenlöchern austretende und sogar über den Topfrand wachsende Dreh- oder Ringelwurzeln im Topf entstehen können, die insbesondere bei baumartigen Pflanzen deren optimale Entwicklung stark behindern. Dieser Pflanztopf ist den Blumentöpfen aus Kunststoff nachgebildet und hat als weitere Nachteile eine zu geringe Verrottungsgeschwindigkeit, da die verdichtete Pappe mehr oder weniger stark imprägniert ist, und eine Form, die nur in kleinen Größen wirtschaftlich herstellbar ist.
Ausgehend von dem geschilderten Stand der Technik liegt der Erfindung die Aufgabe zugrunde, die genannten Nachteile zu vermeiden und einen Pflanztopf der eingangs genannten Art zu schaffen, bei dessen Herstellung auch dann wenig Material abfällt, wenn dieses selbst Abfallmaterial ist; welcher leicht handhabbar und durchwurzelbar ist, sowie in großen Größen herstellbar ist.
Diese Aufgabe ist bei einem Pflanztopf der eingangs genannten Art mit einem Boden und einem anschließenden ringförmigen Mantel mit seitlicher Überlappungszone und mit freiem Rand an der dem Boden gegenüberliegenden Topföffnung erfindungsgemäß dadurch gelöst, daß der Boden und der Mantel getrennt ausgebildet, einander ununterbrochen überlappend zusammengefügt sowie in der Überlappungszone durch ein Klebemittel miteinander verbunden sind, das selbstverständlich zu den zumindest ökologisch unbedenklichen Materialien zählen soll; und daß der Topf hauptsächlich aus einem nachwachsenden Fasermaterial in Vliesform besteht. Dadurch wird vorteilhafterweise erreicht: ein geringer Materialabfall, weil der Kantenverlauf der Abwicklungen von Boden und Mantel einfach ist; eine sichere Handhabung, weil Boden und Mantel über den ganzen Umfang fest miteinander verbunden sind; und die Möglichkeit, den erfindungsgemäßen Pflanztopf in nahezu beliebigen Größen herzustellen, weil er eine einfache stabile Form hat.
Bei einer bevorzugten Ausführungsform des erfindungsgemäßen Pflanztopfes sind die ebenen Abwicklungen des Bodens und des Mantels aus einem Flächengebilde getrennt ausgestanzt, wobei die Topfböden aus einem ersten Flächengebilde und die Topfmäntel aus einem zweiten Flächengebilde erzeugt sein können.
Bei der bevorzugten Ausführungsform ist der Rand der Abwicklung des Bodens hochgestellt und in den unteren Rand des Mantels eingefügt. Dadurch ist die Außenfläche des Mantels glatt und infolgedessen kann dieser störungsfrei in die Innenfläche eines anderen Mantels gesteckt werden.
Bei der bevorzugten Ausführungsform weist der freie Rand des Mantels eine äußere Bördelung auf, welche diesen Rand wesentlich versteift und die Handhabbarkeit des Pflanztopfes, beispielsweise mittels Topfsetzmaschinen zur Bestückung von Stapelmagazinen, entscheidend verbessert.
Die bevorzugte Ausführungsform zeichnet sich durch mindestens zwei, gegebenenfalls segmentförmige, innere Sicken des Mantels auf gleicher Höhe über dem Boden aus. Diese Sicken verbessern die Handhabbarkeit des Topfes insofern auch, als sie verhindern, daß sich zwei zwecks Stapelung zusammengesteckte gleiche Töpfe gegenseitig verkeilen und die Selbsthemmung durch Reibung ein späteres, insbesondere maschinelles, Trennen be- oder verhindert.

Der erfindungsgemäße Pflanztopf soll hauptsächlich aus einem ausschließlich nachwachsende, pflanzliche und/oder tierische Fasern enthaltenden Material, insbesondere aus kurzen Flachsfasern, bestehen. Solches Material verrottet je nachdem in der richtigen Zeit und läßt den Austritt von Pflanzenwurzeln je nach seiner Struktur gut oder noch besser zu. - Als Fasern kommen beispielsweise auch die Fasern von Hanf, Jute und Kokos sowie Baumwolle und Wolle in Frage, soweit mit ihnen eine Vlies- bildung möglich ist. Solche Naturfasern verbrauchen zu ihrem biologischen Abbau keine Bodenbestandteile wie Stickstoff, sondern liefern solche in die Erde.
Der erfindungsgemäße Pflanztopf kann eine Acrylat-Dispersion oder ein Vinyl-Acetat als Fasernbindemittel oder ein solches auf Starke-Basis enthalten, das eine lebensmittelrechtliche Zulassung besitzt und schädigungsfrei in der Erde verbleibt bzw. welches biologisch abgebaut wird. Der erfindungsgemäße Pflanztopf kann ein Klebemittel auf Olefincopolymer- oder Stärke-Basis enthalten, das ebenfalls schädigungsfrei in der Erde zurückbleibt bzw. biologisch abgebaut wird.
Falls eine längere Aufzucht, beispielsweise im Freiland, eine verlangsamte Verrottung wünschenswert erscheinen läßt, kann beim erfindungsgemäßen Pflanztopf das Material des Bodens und des Mantels je ein Grundgitter aus schwerer verrottbarem Material, insbesondere aus Jutefäden, und einen Vliesstoff hauptsächlich aus leichter verrottbaren Fasern, insbesondere des Flachses, aufweisen.
In diesem Fall sorgt das noch nicht verrottete Grundgitter für den Zusammenhalt des Wurzelballens, der dadurch handhabbar ist wie die bekannten Jutesäcke für Wurzelballen.
Offensichtlich ist die Gas- und vor allem Wasserdurchlässigkeit bei einer Auführungsform mit Grundgitter in Boden und Mantel unterschiedlich, je nach der Dichte des leichter verrottbaren Materials, jedenfalls aber wesentlich höher als bei den beiden bekannten Pflanztöpfen, wo die Pappe und das Papier für Fluide kaum durchlässig ist bzw. eine Verbesserung der Durchlässigkeit vom Materialzerfall abhängig ist.

Im folgenden ist die Erfindung anhand der durch die Zeichnung beispielhaft dargestellten bevorzugten Ausführungsform des erfindungsgemäßen Pflanztopfes im einzelnen erläutert.
Es zeigen:
- Figuren 1 und 2:: je eine Draufsicht auf die Innenseite der ebenen Abwicklung des Pflanztopf-Mantels bzw. Bodens
- Figuren 3 und 4:: eine Drauf- bzw. Seitenansicht des Bodens
- Figur 5:: eine Figur 3 entsprechende Seitenansicht des ganzen Pflanztopfes
- Figuren 6 und 8:: je eine Ansicht des ganzen Pflanztopfes von oben bzw. unten
sowie
- Figur 7:: einen abgewinkelten vertikalen zentralen Längsschnitt nach der Linie VII-VII in Figur 6 durch den ganzen Pflanztopf, wobei mit strichpunktierten Linien eine Stapelung zweier gleicher Pflanztöpfe angedeutet ist.

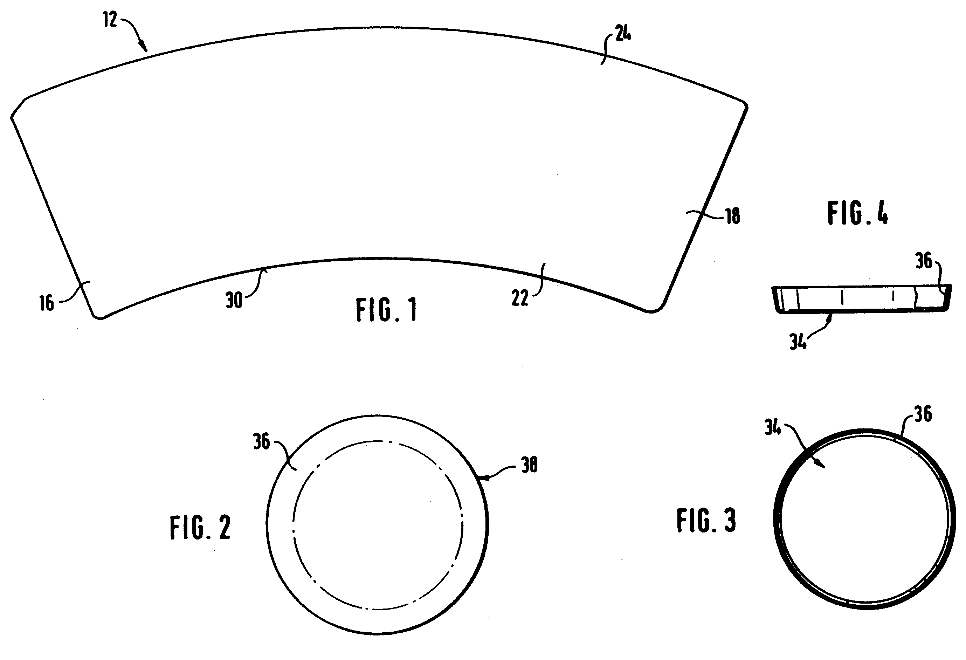

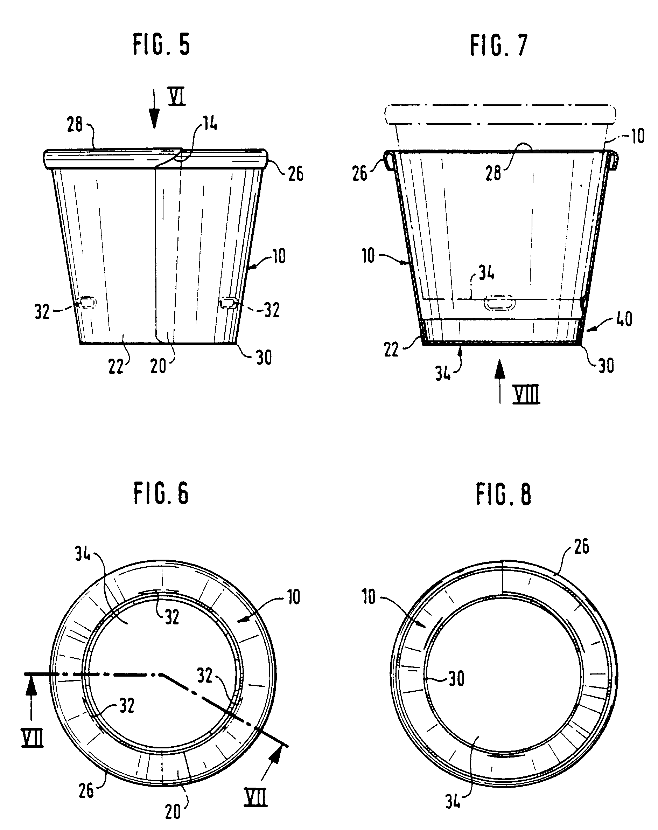

Ein hauptsächlich konischer, sich nach unten verjüngender Mantel 10 des Pflanztopfes ist aus einer Abwicklung 12 geformt, die aus einem Kreisringsektor mit abgerundeten Ecken besteht, wobei die in Figur 1 linke obere Ecke eine Schräge 14 aufweist, deren Zweck noch verdeutlicht wird. Der in Ringform gelegte Mantel 10 ist in Umfangsrichtung dadurch geschlossen, daß die Enden 16 und 18 der Abwicklung 12 sich in einer ersten Zone 20 überlappen, die sich angenähert vertikal erstreckt, und zwar vom unteren Rand 22 der Abwicklung 12 bzw. des Mantels 10 bis zum freien oberen Rand 24 der Abwicklung 12, welcher eine außen umlaufende Bördelung 26 bildet, welche die größere Öffnung 28 des Mantels 10 säumt. In dieser Bördelung 26 überlappt die mit der Schräge 14 versehene, nach außen umgebogene Ecke der Abwicklung 12 die in Figur 1 rechte obere Ecke auf deren Außenseite, so daß eine radiale Stoßkante an der Außenseite der Bördelung 26 vermieden ist. - In gleichem Abstand von der Unterkante 30 der Abwicklung 12 bzw. des Mantels 10 weint dessen unterer Rand 22 drei gleichmäßig auf dessen Umfang verteilte waagrechte innere Sicken 32 auf, auf denen ein hauptsächlich waagrechter Boden 34 eines gleichen Exemplares des Pflanztopfes so aufgesetzt werden kann, daß gemäß Figur 7 zwischen den bei den Mänteln 10 ein Ringspalt entsteht, der bei der Stapelung der Pflanztöpfe deren axiale Trennung erleichtert.
Der Boden 34 hat die Gestalt eines flachen Topfes mit einem hochgestellten Rand 36, dessen Konizität derjenigen des Mantels 10 entspricht, und ist aus einer kreisrunden Abwicklung 38 geformt, beispielsweise durch Drücken. Die vertikale Höhe des Randes 36 am Boden 34 ist geringer als der lichte vertikale Abstand der Sicken 32 von der Unterkante 30 des Mantels 10. - Der Boden 34 ist durch die große Öffnung 28 des Mantels 10 bis zu dessen kleinerer Öffnung an der Kante 30 vertikal eingeführt worden, wobei der Rand 36 schließlich im Mantel 10 festgeklemmt wurde.
Ein Klebemittel, beispielsweise der Schmelzkleber SK 712 von Kleiberit, sichert die formschlüssige Verbindung des Bodens 34 mit dem Mantel 10 in einer zweiten Zone 40, in der Boden und Mantel einander überlappend zusammengefügt sind.
Es hat sich gezeigt, daß statt der drei Sicken 32 zwei diametrale, kreissegmentförmige, sich über je ca. 45° erstreckende Sicken den Anforderungen besser entsprechen.

## Patentansprüche

1. Pflanztopf, gekennzeichnet durch die Kombination
1.1) einer zweiteiligen Form aus einem Boden (34) und einem getrennt ausgebildeten, anschließenden ringförmigen Mantel (10) mit seitlicher Überlappungszone (20) und mit freiem Rand (24) an der dem Boden gegenüberliegenden Topföffnung (28), wobei Boden (34) und Mantel (10) einander ununterbrochen überlappend zusammengefügt sowie in den Überlappungszonen (20 und 40) durch ein Klebemittel miteinander verbunden sind; mit
1.2) hauptsächlich in Erde verrottenden und im übrigen ökologisch unbedenklichen Materialien, aus denen der Topf besteht, nämlich hauptsächlich aus einem nachwachsenden Fasermaterial in Vliesform.

2. Pflanztopf nach Anspruch 1, dessen Boden (34) einen hochgestellten Rand (34) aufweist, der in den unteren Rand (22) des Mantels (10) eingefügt ist, wobei wenigstens die ebene Abwicklung (12) des Mantels (10) aus einem Flächengebilde ausgestanzt ist, dadurch **gekennzeichnet**, daß eine ebene Abwicklung (38) des Bodens (34) aus einem Flächengebilde getrennt vom Mantel (10) ausgestanzt ist, dessen hochgestellter Rand (36) den Bodenrand bildet.

3. Pflanztopf nach Anspruch 1 oder 2, wobei der freie Rand (24) des Mantels (10) eine äußere Bördelung (26) aufweist.

4. Pflanztopf nach einem der Ansprüche 1 bis 3, gekennzeichnet durch mindestens zwei, gegebenenfalls segmentförmige, innere Sicken (32) des Mantels (10) auf gleicher Höhe über dem Boden (34).

5. Pflanztopf nach einem der Ansprüche 1 bis 4, dadurch gekennzeichnet, daß der Mantel (10) und der Boden (34) aus zwei verschiedenen Flächengebilden geformt sind.

6. Pflanztopf nach einem der Ansprüche 1 bis 5, dadurch gekennzeichnet, daß er hauptsächlich aus einem Vlies aus kurzen Flachs- und/oder Jute- und/oder Baumwollfasern und/oder aus einer Mischung mindestens zweier dieser Fasern besteht.

7. Pflanztopf nach einem der Ansprüche 1 bis 6, gekennzeichnet durch eine Acrylat-Dispersion oder ein Vinyl-Acetat als Fasernbindemittel oder insbesondere durch ein solches auf Stärke-Basis.

8. Pflanztopf nach einem der Ansprüche 1 bis 7, gekennzeichnet durch ein Klebemittel auf Olefincopolymer- oder Stärke-Basis.

9. Pflanztopf nach einem der Ansprüche 1 bis 8, dadurch gekennzeichnet, daß das Material des Bodens (34) und des Mantels (10) je ein Grundgitter aus schwerer verrottbarem Material, insbesondere aus Jutefäden, und einen Vliesstoff hauptsächlich aus leichter verrottbaren Fasern, insbesondere des Flachses, aufweist.

10. Verwendung eines Pflanztopfes nach einem der Ansprüche 1 bis 9 zur Kultivierung von Jungpflanzen.

## Claims

1. A plant pot characterised by the combination
1.1) of a two-part shape consisting of a bottom (34) and a separately constructed adjacently disposed annular shell (10) with a lateral overlapping zone (20) and with a free edge (24) at the pot aperture (28) which is opposite the bottom, the bottom (34) and the shell (10) being joined together to overlap in uninterrupted fashion and to be connected to each other in the overlapping zones (20 and 40) by an adhesive and with
1.2) materials which rot down mainly in the earth and which are otherwise ecologically safe from which the pot is composed, namely in the main a secondarily expanding fibre material of fleece form.

2. A plant pot according to claim 1, of which the bottom (34) comprises a raised edge (34) which is inserted into the bottom edge (22) of the shell (10) whereby at least the plane development (12) of the shell (10) is stamped from a flat structure, characterised in that a plane development (38) of the bottom (34) is stamped from a flat structure separately from the shell (10) of which the raised edge (36) forms the rim of the bottom.

3. A plant pot according to claim 1 or 2, whereby the free rim (24) of the shell (10) has an outer flanged-over edge (26).

4. A plant pot according to one of claims 1 to 3, characterised by at least two possibly segmental inner beads (32) on the shell (10) at the same height above the bottom (34).

5. A plant pot according to one of claims 1 to 4, characterised in that the shell (10) and the bottom (34) are formed from two different flat structures.

6. A plant pot according to one of claims 1 to 5, characterised in that it consists mainly of a fleece consisting of short flat and/or jute and/or cotton fibres and/or of a mixture of at least two of these fibres.

7. A plant pot according to one of claims 1 to 6, characterised by an acrylate dispersion or a vinyl acetate as a fibre bonding means or in particular by a starch-based bonding means.

8. A plant pot according to one of claims 1 to 7, characterised by an olefin copolymer or starch-based adhesive.

9. A plant pot according to one of claims 1 to 8, characterised in that the material of the bottom (34) and of the shell (10) comprises in each case a basic lattice of more difficulty rottable material, particularly jut threads, and a fleece material consisting mainly of more readily rottable fibres, particularly of flax.

10. The use of a plant pot according to one of claims 1 to 9 for cultivating young plants.

## Revendications

1. Pot pour la culture de plantes, caractérisé par la combinaison
- d'un moule en deux parties, composé d'un fond (34) suivi d'une enveloppe annulaire (10) réalisée séparément, avec une zone de chevauchement latéral (20) et un rebord libre (24) sur l'ouverture du pot (28), opposée au fond, le fond (34) et l'enveloppe (10) étant mutuellement réunis en se chevauchant d'une manière continue, et étant assemblés entre eux par un agent adhésif dans les zones de chevauchement (20 et 40); avec
- des matériaux essentiellement putréscibles dans la terre, et sans danger au demeurant au plan écologique, dont se compose le pot, à savoir principalement d'un matériau fibreux régénérable en forme de voile.

2. Pot pour la culture de plantes suivant la revendication 1, dont le fond (34) présente un rebord (36) plié en U, inséré dans le rebord inférieur (22) de l'enveloppe (10), le déroulement plan (12) de l'enveloppe (10), au moins, étant découpé d'une structure plane, caractérisé en ce qu'un déroulement plan (38) du fond (34) est découpé d'une structure plane, séparément de l'enveloppe (10), dont le rebord plié en U (36) forme le rebord du fond.

3. Pot pour la culture de plantes suivant l'une des revendications 1 et 2, caractérisé en ce que le rebord libre (24) de l'enveloppe (10) présente un bordage externe (26).

4. Pot pour la culture de plantes suivant l'une quelconque des revendications 1 à 3, caractérisé par deux moulures internes (32), au moins, de l'enveloppe (10), éventuellement en forme de segments, prévues à la même hauteur au-dessus du fond (34).

5. Pot pour la culture de plantes suivant l'une quelconque des revendications 1 à 4, caractérisé en ce que l'enveloppe (10) et le fond (34) sont formés à partir de deux structures planes différentes.

6. Pot pour la culture de plantes suivant l'une quelconque des revendications 1 à 5, caractérisé en ce qu'il se compose essentiellement d'un voile de fibres courtes de lin et/ou de jute et/ou de coton, ou d'un mélange au moins de deux de ces fibres.

7. Pot pour la culture de plantes suivant l'une quelconque des revendications 1 à 6, caractérisé par une dispersion à base d'acrylate ou par un acétate de vinyle comme liant pour fibres, ou par un tel liant à base d'amidon, notamment.

8. Pot pour la culture de plantes suivant l'une quelconque des revendications 1 à 7, caractérisé par un agent adhésif à base de copolymère oléfinique ou d'amidon.

9. Pot pour la culture de plantes suivant l'une quelconque des revendications 1 à 8, caractérisé en ce que le matériau du fond (34) et de l'enveloppe (10) présente respectivement une grille de base, composée d'un matériau plus difficilement putréscible, de fils de jute notamment, et une étoffe nappée principalement composée de fibres plus facilement putréscibles, de lin notamment.

10. Utilisation d'un pot pour la culture de plantes suivant l'une quelconque des revendications 1 à 9 pour la culture de plants.
